# EUROPÄISCHE PATENTANMELDUNG

(11) **EP 1 250 978 A2**
(43) Veröffentlichungstag der Anmeldung: **23.10.2002**
(21) Anmeldenummer: 02100326.4
(22) Anmeldetag: 02.04.2002
(51) Int. Cl.: B23Q 7/10, B23Q 7/14, B23P 21/00

(54) **Werkstückträger-Wechseleinrichtung und Wechselverfahren für Werkstückträger**

(30) Priorität: 19.04.2001 DE 10119229
(71) Anmelder: SIEMENS AKTIENGESELLSCHAFT, 80333 München (DE)
(72) Erfinder: Müller, Lothar, 69124, Heidelberg (DE); Schütz, Dietmar, 81541, München (DE); Schulz, Holger, 76646, Bruchsal (DE); Wäckerle, Uwe, 76646, Bruchsal (DE)
(74) Vertreter: Wiedemann, Albert, Dipl.-Ing. (FH)

(57) **Zusammenfassung**

Werkstückträger-Wechseleinrichtung und Wechselverfahren für Werkstückträger, wobei ein Werkstückträger (100) aus einer Lagereinheit (11, 12) entnommen und in eine Pufferposition bewegt wird. Gleichzeitig wird von einer Bereitstellposition (240) ein anderer Werkstückträger (100) zu einer der Lagereinheiten (11, 12) bewegt. Anschließend wird der Werkstückträger (100) von der Pufferposition (210) in die Bereitstellposition (240) bewegt. Erfindungsgemäß wird die Wechselzeit stark verringert.

## Beschreibung

Die Erfindung betrifft eine Werkstückträger-Wechseleinrichtung und ein Wechselverfahren für Werkstückträger, welche in einer mit einer Mehrzahl von Lagerpositionen versehenen Lagereinheit angeordnet sind, und welche an eine Bereitstellposition außerhalb der Lagereinheit verbracht werden, um von einer Handhabungseinrichtung bearbeitet zu werden.

Beispielsweise im Bereich von elektrischen Bauelementen werden unterschiedliche Träger zur Bereitstellung der Bauelemente verwendet. Eine verbreitete Art ist, die Bauelemente in tablettartigen Werkstückträgern oder auch Flächenmagazinen bereitzustellen. Diese Werkstückträger werden in einer Lagereinheit gelagert. Um Bauelemente aus dem Werkstückträger entnehmen zu können, ist es erforderlich, einen der Werkstückträger von der Lagereinheit weg in eine Entnahmeposition zu befördern. An der Entnahmeposition können die Bauelemente mittels einer Handhabungseinrichtung von dem Werkstückträger entnommen werden.

Ist der Werkstückträger an der Entnahmeposition vollständig entleert worden oder wird ein auf einem anderen Werkstückträger als dem an der Entnahmeposition bereitgestellten Werkstückträger vorhandenes Bauelement benötigt, so muss der Werkstückträger ausgewechselt werden. Herkömmlicherweise wird hierzu der entladene oder zu wechselnde Werkstückträger mittels einer Transporteinrichtung aus der der Handhabungseinrichtung zugewandten Entnahmeposition entfernt und zu der Lagereinheit bewegt. Anschließend wird aus der Lagereinheit ein anderer Werkstückträger entnommen und mittels der Transporteinheit in die Entnahmeposition verbracht.

Diese Art des Wechselns eines Werkstückträgers unter Verwenden der herkömmlichen Wechseleinrichtung ist sehr langsam und umständlich. Daher kann es zu Verzögerungen des Entnahmeprozesses der Bauelemente und damit zu einer Verzögerung jenes Prozesses kommen, welchem die Bauelemente zur Verfügung gestellt werden sollen. Jedoch sind beispielsweise Bestückvorrichtungen für Bauelemente auf hohen Durchsatz ausgelegt, so dass es unerwünscht ist, die Verarbeitungszeit der Bestückvorrichtung durch eine externe Vorrichtung, wie beispielsweise die Wechseleinrichtung für Werkstückträger, zu verlängern.

Es ist eine Aufgabe der Erfindung, eine Werkstückträger-Wechseleinrichtung sowie ein Wechselverfahren für Werkstückträger anzugeben, welches höhere Flexibilität und geringere Wechselzeiten des Werkstückträgers aufweist.

Die Aufgabe wird durch die Erfindung gemäß den unabhängigen Ansprüchen gelöst. Bevorzugte Ausgestaltungen der Erfindung sind in den abhängigen Ansprüchen beansprucht.

Durch die erfindungsgemäße Werkstückträger-Wechseleinrichtung nach Anspruch 1 ist es möglich, das Zuführen und Rückführen von Werkstückträgern von einer Lagerposition in einer Lagereinheit zu einer Bereitstellposition zu entkoppeln. Durch Vorsehen einer Pufferposition ist es möglich, den nächsten zu bearbeitenden Werkstückträger mittels der ersten Transportvorrichtung in die Pufferposition zu bewegen, während ein anderer Werkstückträger in der Bereitstellposition von einer Handhabungseinrichtung bearbeitet wird. Soll der Werkstückträger in der Bereitstellposition gewechselt werden, ist es lediglich erforderlich, den Werkstückträger mittels der ersten Transportvorrichtung aus der Bereitstellposition zu bewegen und mittels einer zweiten Transportvorrichtung den in der Pufferposition vorgesehenen zusätzlichen Werkstückträger von der Pufferposition in die Bereitstellposition zu bewegen. Da die Pufferposition in der Nähe der Bereitstellposition angeordnet ist, sind lediglich kurze Strecken mittels der zweiten Transportvorrichtung zu überbrücken. Daher kann der Wechsel des Werkstückträgers sehr schnell durchgeführt werden.

Gemäß der Weiterbildung der Erfindung nach Anspruch 2 ist die erste Transportvorrichtung in eine Zuführeinheit und eine Rückführeinheit aufgeteilt. Die Zuführeinheit und die Rückführeinheit können gleichzeitig unabhängig voneinander bewegt werden. Somit kann ein Werkstückträger von der Zuführeinheit in der oder entgegen der ersten Transportrichtung bewegt werden, während von der Rückführeinheit ein Werkstückträger entgegen der bzw. in der ersten Transportrichtung bewegbar ist. Im Unterschied zu der Ausgestaltung nach Anspruch 1, bei welcher eine erste Transportvorrichtung vorgesehen ist, von der im Falle eines Wechsels der aus der Bereitstellposition zu entnehmende Werkstückträger bewegt werden muss, weist die Ausgestaltung nach Anspruch 2 jeweils einen separaten Teiltransport für das Zuführen der Werkstückträger aus der Lagereinheit in die Pufferposition bzw. für das Rückführen der Werkstückträger aus der Bereitstellposition in die Lagereinheit auf. Dies ermöglicht einen noch schnelleren Wechselvorgang, da bereits während des Rücktransports des zu wechselnden Werkstückträgers aus der Bereitstellposition ein weiterer Werkstückträger zu der Pufferposition bewegt werden kann.

Die Weiterbildung nach Anspruch 3 und 4 gibt eine integrale Transportvorrichtung an, welche die Funktionen der ersten Transportvorrichtung und der zweiten Transportvorrichtung in einer einzigen Vorrichtung zusammenführt. Hierbei ist ein besonders kompakter Aufbau der Transportvorrichtung möglich und es wird ein vereinfachtes Handhaben der Werkstückträger vorgesehen, da der Werkstückträger nicht mehr zwischen der ersten Transportvorrichtung und der zweiten Transportvorrichtung übergeben werden muss.

Durch die Weiterbildung nach Anspruch 5 wird eine zweite integrale Transportvorrichtung aus einer dritten Transportvorrichtung, welche analog der ersten Transportvorrichtung aufgebaut ist und einer vierten Transportvorrichtung, welche analog der zweiten Transportvorrichtung aufgebaut ist, geschaffen. Die zweite integrale Transportvorrichtung ist parallel zu der integralen Transportvorrichtung nach den Ansprüchen 3 und 4 angeordnet. Durch die Weiterbildung nach Anspruch 5 wird der aus den Merkmalen nach Anspruch 2 folgende Vorteil auch für integral ausgebildete Transportvorrichtungen verwirklicht.

Die Ausgestaltung der Werkstückträger-Wechseleinrichtung nach Anspruch 6 lehrt eine Realisierung der Erfindung mit in vertikaler Richtung übereinander angeordneten Werkstückträgern in einer Lagereinheit sowie einer ersten, horizontalen, und einer zweiten, vertikalen, Transportrichtung. Die Lagereinheit ist mittels einer zusätzlichen fünften Transportvorrichtung in vertikaler Richtung bewegbar ausgebildet. Dies ermöglicht, Bewegungen der ersten bzw. dritten Transportvorrichtung auf eine Bewegungsrichtung, z. B. die horizontale Richtung, zu beschränken. Da die Lagereinheit in vertikaler Richtung, d. h. relativ zu der ersten bzw. dritten Transportvorrichtung bewegt wird, können trotzdem sämtliche Lagerpositionen der Lagereinheit mittels der ersten bzw. dritten Transportvorrichtung erreicht werden.

Gemäß der Weiterbildung nach Anspruch 7 weist die Lagereinheit einen ersten Teilbereich und einen zweiten Teilbereich auf. Hierbei besteht der Vorteil, dass beispielsweise in dem ersten Teilbereich vollständig beladene Werkstückträger und in dem zweiten Teilbereich teilweise entleerte Werkstückträger gelagert werden können. Es können jedoch auch in einem Teilbereich teilweise entleerte oder volle Werkstückträger und in dem anderen Teilbereich vollständig entleerte Werkstückträger gelagert werden. Hierbei können beispielsweise während des Betriebs der Wechselvorrichtung lediglich unter Verwenden des ersten Teilbereichs die vollständig entleerten Werkstückträger in dem anderen Teilbereich der Lagereinheit entnommen werden, ohne dass sich dies auf den Betrieb der Werkstückträger-Wechseleinrichtung mit dem ersten Teilbereich auswirkt.

Um eine noch höhere Flexibilität vorzusehen, ist nach der Weiterbildung durch Anspruch 8 vorgesehen, den ersten Teilbereich und den zweiten Teilbereich der Lagereinheit koppelbar auszugestalten. Hierbei kommen alle Arten von Koppelvorrichtungen in Frage, beispielsweise elektromagnetische, hydraulische und/oder pneumatische.

Es ist jedoch auch gemäß Anspruch 9 möglich, den ersten Teilbereich und den zweiten Teilbereich der Lagereinheit räumlich getrennt voneinander anzuordnen. Hierbei können die Teilbereiche übereinander und/oder hintereinander in Bezug auf eine der Transportrichtungen angeordnet sein. Günstig ist es, einen ersten Teilbereich unterhalb der ersten bzw. dritten Transportvorrichtung und der Handhabungseinheit zugewandt anzuordnen und einen zweiten Teilbereich oberhalb der ersten bzw. dritten Transportvorrichtung und der Handhabungseinrichtung abgewandt anzuordnen. Die Lagereinheit kann auch in mehr als zwei Teilbereiche unterteilt werden.

Erfindungsgemäß wird auch ein Wechselverfahren für Werkstückträger geschaffen, wobei ein Werkstückträger mittels einer ersten Transportvorrichtung in einer ersten Transportrichtung zu einer Pufferposition in der Nähe der Bereitstellposition bewegt wird, der Werkstückträger mittels einer zweiten Transportvorrichtung in einer zweiten Transportrichtung von der Pufferposition zu der Bereitstellposition bewegt wird, und der Werkstückträger mittels der ersten Transportvorrichtung entgegen der ersten Transportrichtung von der Bereitstellposition in eine der Lagerpositionen bewegt wird. Das erfindungsgemäße Verfahren bietet den Vorteil, dass die erforderlichen Transportbewegungen jeweils entkoppelt sind. Mittels einer ersten Transportvorrichtung wird die Bewegung zwischen der Bereitstellposition bzw. der Pufferposition in der Nähe der Bereitstellposition und den Lagerpositionen der Lagereinheit bewerkstelligt. Eine zweite Transportvorrichtung sorgt für den Transport von der Pufferposition in die Bereitstellposition.

Die Weiterbildung nach Anspruch 11 sieht vor, dass die Lagereinheit in einen ersten Teilbereich und einen zweiten Teilbereich unterteilt ist, welche voneinander beabstandet sind und dass die Werkstückträger selektiv aus einem Teilbereich entnommen und zu der Pufferposition bewegt werden und von der Bereitstellposition in den anderen Teilbereich verbracht werden. Hierbei besteht der Vorteil, dass beispielsweise ein Teilbereich lediglich mit vollständig entleerten Werkstückträgern versehen werden kann. Diese können während des laufenden Betriebs der Wechseleinrichtung gegen vollständig beladene Werkstückträger ausgetauscht und an die entsprechenden Stellen des anderen Teilbereichs verbracht werden. Hierdurch wird ein kontinuierlicher Betrieb ohne störende Wechselzeiten für die Wechseleinrichtung ermöglicht.

Für eine noch höhere Flexibilität wird durch die Weiterbildung nach Anspruch 12 vorgesehen, den ersten Teilbereich und den zweiten Teilbereich miteinander, z. B. während des Betriebs, mechanisch zu koppeln. Hierbei kann während des Betriebs oder vor oder nach dem Betrieb ein Koppeln durchgeführt werden. Somit ist sowohl ein Betrieb mit einer einzigen Lagereinheit, als auch ein Betrieb mit einer in mehrere Teilbereiche unterteilten Lagereinheit möglich. Das Koppeln der Teilbereiche ist insbesondere sinnvoll, wenn beispielsweise eine hohe Stückzahl gleichartiger Bauelemente den Werkstückträgern bereitgestellt wird und die Bauelemente lediglich nacheinander aus den einzelnen Werkstückträgern entnommen werden sollen.

Die Erfindung wird unter Bezugnahme auf die Zeichnung anhand bevorzugter Ausführungsformen näher erläutert. In der Zeichnung zeigen:
Figur 1 eine schematische Ansicht einer bevorzugten Ausführungsform der Erfindung,
Figur 2 eine schematische Ansicht einer anderen Ausführungsform der Erfindung,
Figur 3 eine perspektivische schematische Ansicht einer weiteren Ausführungsform der Erfindung, und
Figur 4 eine Detailansicht aus Figur 3.

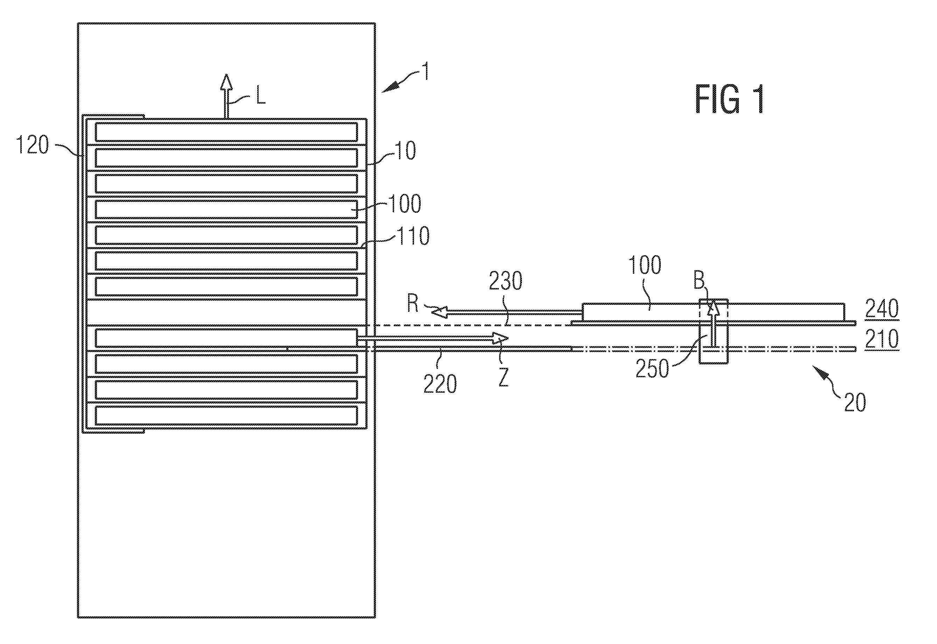

Aus Figur 1 ist eine Werkstückträger-Wechseleinrichtung 1 ersichtlich, welche eine Lagereinheit 10 und eine Transporteinheit 20 aufweist. Die Lagereinheit 10 weist eine Mehrzahl von Lagerpositionen 110 auf. In jeder der Lagerpositionen 110 kann ein Werkstückträger 100, beispielsweise ein Flächenmagazinträger, angeordnet sein. Beispielsweise sind an den Lagerpositionen 110 jeweils Fächer oder Führungsschienen zum Aufnehmen der Werkstückträger vorgesehen. Die Fächer sind z.B. über einen Rahmen 120 miteinander verbunden. Die Fächer können zusammen mit dem Rahmen 120 in der Richtung L bewegt werden. Hierzu wird ein nicht gezeigter Antrieb verwendet.

An der Lagereinheit 10 ist die Transporteinheit 20 angeordnet. Die Transporteinheit 20 weist eine Zuführeinheit 220 auf, von welcher Werkstückträger 100 aus Lagerpositionen 110 in eine Pufferposition 210 bewegt werden können. In der Richtung L ist über der Zuführeinheit 220 eine Rückführeinheit 230 angeordnet. Von der Rückführeinheit können Werkstückträger 100 von einer Bereitstellposition der Transporteinrichtung 20 in eine Lagerposition 110 der Lagereinheit 10 bewegt werden. Dabei sind die Zuführeinheit und die Lagereinheit beispielsweise derart angeordnet, dass von ihnen gleichzeitig zwei übereinander liegende Lagerpositionen 110 der Lagereinheit 10 verarbeitet werden können, d. h. Werkstückträger 100 aus den entsprechenden Lagerpositionen entnommen oder in diese eingesetzt werden können. Die Transporteinrichtung 20 ist ferner mit einem Antrieb 250 versehen, von welchem Werkstückträger aus der Pufferposition 210 in die Bereitstellposition 240 in einer zweiten Transportrichtung B bewegt werden können. Der Antrieb 250 kann dabei entweder ortsfest an der Transporteinrichtung 20 in der Nähe der Pufferposition 2 und der Bereitstellposition 240 angeordnet sein. Es ist auch möglich, den Antrieb 250 an der Zuführeinheit 220 und/oder an der Rückführeinheit 230 anzuordnen. Der Antrieb 250 entspricht funktionell der beanspruchten zweiten Transportvorrichtung.

Soll ein an der Bereitstellposition 240 angeordneter Werkstückträger 100 gegen einen anderen Werkstückträger gewechselt werden, wird zunächst mittels der Zuführeinheit 220 ein Werkstückträger, beispielsweise der mit Typ 3 bezeichnete Werkstückträger, aus der Lagereinheit 10 entnommen und zu der Pufferposition 210 bewegt. Gleichzeitig oder geringfügig davor oder danach wird der an der Bereitstellposition 240 angeordnete Werkstückträger, z. B. der in der Figur 1 mit Typ 2 bezeichnete Werkstückträger aus der Bereitstellposition 240 mittels der Rückführeinheit 230 in der Rückführrichtung R in eine freie Lagerposition 110 der Lagereinheit 10 bewegt. Anschließend wird der in der Pufferposition 210 angeordnete Werkstückträger Typ 2 mittels des Antriebs 250 von der Pufferposition 210 in die Bereitstellposition 240 bewegt. Gleichzeitig mit dem Anheben des Werktückträgers Typ 2 kann der Rahmen 120 um eine Ebene, welche der Höhe einer Lagerposition 110 oder eines entsprechenden Fachs der Lagereinheit 10 entspricht, in der Richtung L bewegt werden. Somit wird die Werkstückträger-Wechseleinrichtung für den nächsten Wechsel vorbereitet, welcher identisch dem beschriebenen Wechsel des Werkstückträgers durchgeführt werden kann.

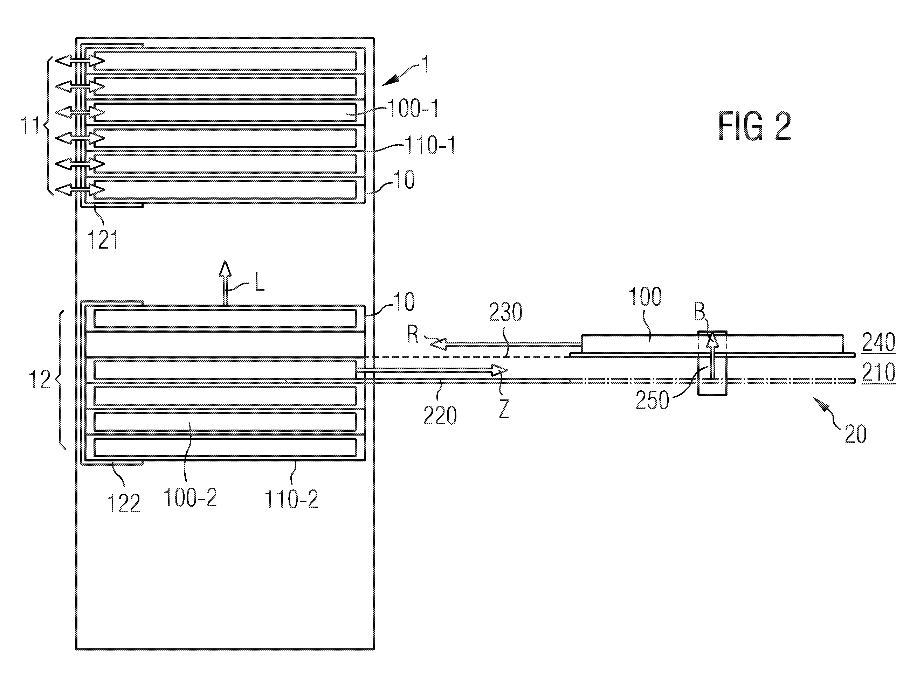

Aus Figur 2 ist eine modifizierte Ausführungsform der Erfindung ersichtlich. Der Unterschied zu der aus der Figur 1 ersichtlichen Ausführungsform besteht darin, dass die Lagereinheit 10 zwei Lagerbereiche 11 und 12 aufweist. Der erste Lagerbereich 11 stellt einen Reserve-Lagerbereich dar. Er weist einen Rahmen 121 auf, in welchem eine Mehrzahl von Lagerpositionen z. B. als Lagerfächer angeordnet sind. In jeder Lagerposition 110-1 kann ein Werkstückträger 100-1 angeordnet sein. Ein zweiter Lagerbereich 12 weist ähnlich dem ersten Lagerbereich 11 einen Rahmen 122 auf, welcher mit einer Mehrzahl von Lagerpositionen 110-2 versehen ist. Die Lagerpositionen 110-2 können jeweils mit einem Werkstückträger 100-2 belegt werden.

Die Funktionsweise der Ausführungsform nach Figur 2 ist bis auf folgendes im Wesentlichen identisch zu jener der Ausführungsform nach Figur 1. Das Ablegen und Entnehmen von Werkstückträgern 100-1 oder 100-2 aus der Lagereinheit 10 ist unterschiedlich. Bei der modifizierten Ausführungsform der Erfindung ist es möglich, selektiv Werkstückträger 100-1 und 100-2 aus dem ersten Lagerbereich 11 und aus dem zweiten Lagerbereich 12 zu entnehmen sowie darin abzulegen. Hierbei kann beispielsweise mittels der Zuführeinrichtung 220 ein Werkstückträger 100-2 aus dem zweiten Lagerbereich 12 entnommen und in die Pufferposition 210 verbracht werden, während ein Werkstückträger 100 von der Bereitstellposition 240 in eine Lagerposition 110-2 des zweiten Lagerbereichs bewegt wird.

Es ist jedoch ebenso möglich, den Werkstückträger 100 von der Bereitstellposition 240 in eine Lagerposition 110-1 des ersten Lagerbereichs zu bewegen. Hierzu kann der Rahmen 121 mitsamt den Lagerpositionen 110-1 in der Richtung L mittels eines nicht gezeigten Antriebs relativ zu der Transporteinheit 20 bewegt werden.

Mittels dieser Anordnung ist es beispielsweise möglich, in einem Lagerbereich 11 oder 12 Werkstückträger 100-1 bzw. 100-2 von einer Bedienperson auswechseln zu lassen, während der Wechselbetrieb mit dem anderen Lagerbereich 12 oder 11 ununterbrochen fortgeführt werden kann.

Bei den aus den Figuren 1 und 2 ersichtlichen Ausführungsformen der Erfindung ist es beispielsweise auch möglich, enteerte Werkstückträger 100 bzw. 100-1 oder 100-2 zu wechseln, indem während einer Totzeit, während der kein Werkstück aus dem Werkstückträger 100 entnommen werden soll, der leere Werkstückträger 100 aus der Bereitstellposition 240 entnommen und ein voller Werkstückträger 100, welcher von seiner Art dem Werkstückträger 100 entspricht, welcher von der Bereitstellposition 240 entnommen wurde, an der Pufferposition 210 oder der Bereitstellposition 240 eingesetzt wird.

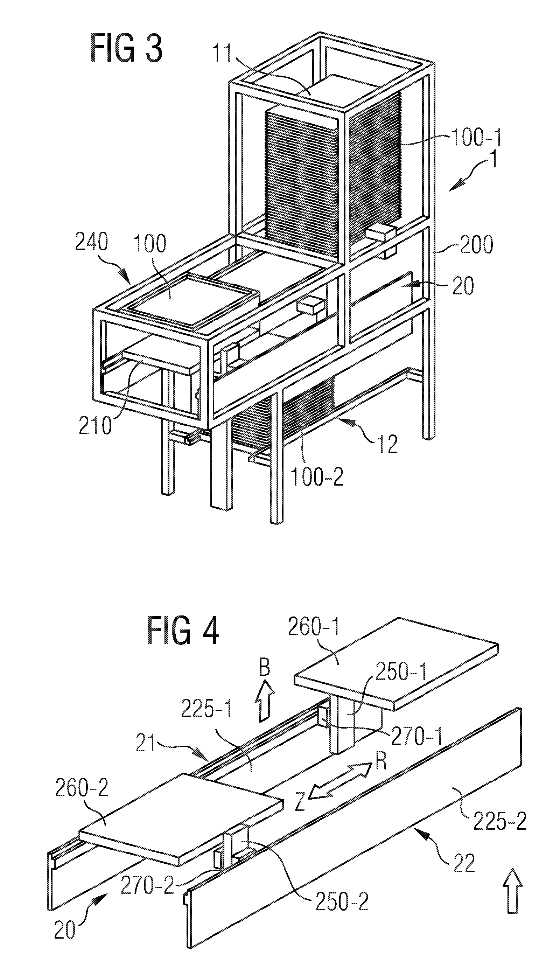

Aus den Figuren 3 und 4 ist eine weitere bevorzugte Ausführungsform der Erfindung schematisch ersichtlich. Hiernach weist eine Werkstückträger-Wechseleinrichtung 1 ein Chassis 200 auf. In dem Chassis sind eine erste Lagereinheit 11 und eine zweite Lagereinheit 12 angeordnet. Ferner befindet sich in dem Chassis eine Transporteinrichtung 20. Von der Transporteinrichtung 20 sind Werkstückträger 100-1 der ersten Lagereinheit 11 sowie Werkstückträger 100-2 der zweiten Lagereinheit 12 in einer ersten Transportrichtung Z bzw. R bewegbar. Die Transporteinrichtung 20 weist zwei im Wesentlichen identische und parallel zueinander angeordnete Transporteinheiten 21 und 22 auf. Jede der Transporteinheiten 21 und 22 ist mit einem ersten Antrieb 270-1 bzw. 270-2 versehen. Der erste Antrieb ist aber jeweils entlang einer in der ersten Transportrichtung verlaufenden Führungseinrichtung 225-1 bzw. 225-2 bewegbar.

An dem ersten Antrieb 270-1 bzw. 270-2 ist jeweils ein zweiter Antrieb 250-1 bzw. 250-2 angeordnet. Der zweite Antrieb 250-1 bzw. 250-2 kann Bewegungen in der zweiten Transportrichtung B ausführen. An jedem zweiten Antrieb angeordnet befindet sich eine Aufnahme 260-1 bzw. 260-2 für zu transportierende Werkstückträger 100-1 und 100-2.

Die Aufnahmen 260-1 und 260-2 sind einander zugewandt angeordnet und verlaufen entlang derselben Transportstrecke in der ersten Transportrichtung Z bzw. R.

Die Transporteinrichtung 20 ist, wie aus Figur 3 ersichtlich, in der zweiten Transportrichtung B zwischen der ersten Lagereinheit 11 und der zweiten Lagereinheit 12 angeordnet. Die erste Lagereinheit 11 und die zweite Lagereinheit 12 können in der ersten Transportrichtung Z bzw. R versetzt zueinander angeordnet sein. Mittels den vorhandenen ersten und zweiten Transportvorrichtungen 270-1, 270-2, 250-1 und 250-2 ist es möglich, Werkstückträger zwischen einer Pufferposition 210, einer in der zweiten Transportrichtung B überhalb der Pufferposition 210 angeordneten Entnahmeposition 240 sowie zwischen Lagerpositionen in der ersten Lagereinheit 11 und der zweiten Lagereinheit 12 zu bewegen.

Nachfolgend wird die Wechseloperation eines Werkstückträgers aus der Entnahmeposition 240 näher erläutert.

Zunächst wird mittels der ersten Transporteinheit 21 oder der zweiten Transporteinheit 22 der Werkstückträger 100 in der Transportrichtung Z bzw. R aus der Entnahmeposition zu der ersten Lagereinheit 11 bewegt und dort in eine Lagerposition der ersten Lagereinheit 11 eingesetzt. Gleichzeitig hierzu wird mittels der zweiten Transporteinheit 22 ein nachfolgend bereitzustellender Werkstückträger 100-2 aus der zweiten Lagereinheit 12 entnommen und an die Pufferposition 210 verbracht. Hierbei muss der Werkstückträger 100-2 entweder lediglich in der ersten Transportrichtung Z bzw. R oder in der zweiten Transportrichtung B bewegt werden. Die Bewegungen werden jeweils mittels der ersten Transportvorrichtung 270-2 bzw. der zweiten Transportvorrichtung 250-2 der zweiten Transporteinheit 22 durchgeführt. Anschließend wird der Werkstückträger 100-2 mittels der zweiten Transporteinheit 22 von der Pufferposition 210 in die Entnahmeposition 240 verbracht. Hierbei wird der Werkstückträger 100-2 mittels der zweiten Transportvorrichtung 250-2 der zweiten Transporteinheit 22 in der zweiten Transportrichtung B bewegt.

Es ist auch möglich, dass der zu entnehmende Werkstückträger 100 in die dieselbe Lagereinheit 11 oder 12 eingesetzt wird, aus welcher der bereitzustellende Werkstückträger entnommen wird.

Die Lagereinheiten 11 und 12 sind jeweils mit einem Antrieb 10, mittels welchem in der ersten Transportrichtung und/oder der zweiten Transportrichtung in dem Chassis 200 bewegbar sind. Es ist auch möglich, lediglich einen der beiden Lagereinheiten 11 oder 12 in der Werkstückträger-Wechseleinrichtung vorzusehen.

Der Antrieb 250 kann beispielsweise ein Kettenantrieb sein, welcher zu beiden Seiten der Zuführeinheit 220 und der Rückführeinheit 230 Ketten mit Mitnehmern aufweist. Die Ketten verlaufen im Wesentlichen in der zweiten Transportrichtung B. Überhalb und unterhalb der Zuführeinheit 220 und der Rückführeinheit 230 sind Rotationsachsen mit Kettenrädern für die Ketten angeordnet. Die Rotationsachsen der Ketten verlaufen im Wesentlichen in der Zuführrichtung Z bzw. in der Rückführrichtung R.

Anstatt eines Kettenantriebs ist auch eines Antrieb mittels Förderschnecken denkbar, wobei die Förderschnecken ebenfalls zu beiden Seiten der Zuführeinrichtung 220 bzw. der Zuführrichtung 230 angeordnet sind und sich in der zweiten Transportrichtung B erstrecken.

Es ist auch möglich, mehr als eine Pufferposition vorzusehen. Dabei kann eine gemeinsame Zuführeinrichtung 220 alle Pufferpositionen bedienen oder es kann je Pufferposition eine Zuführeinheit vorgesehen werden.

## Patentansprüche

1. Werkstückträger-Wechseleinrichtung für in einer mit einer Mehrzahl von Lagerpositionen versehenen Lagereinheit angeordnete Werkstückträger, welche an eine Bereitstellposition außerhalb der Lagereinheit verbracht werden, um von einer Handhabungseinrichtung bearbeitet zu werden,
**dadurch gekennzeichnet, dass**
• eine erste Transportvorrichtung (220, 230) vorgesehen ist,
• von der ersten Transportvorrichtung (220, 230) die Werkstückträger (100) in einer ersten Transportrichtung (Z) zwischen einer Lagerposition (110) in der Lagereinheit (10) und einer Pufferposition (210) in der Nähe der Bereitstellposition (240) bewegbar sind,
• von der ersten Transportvorrichtung (220, 230) die Werkstückträger(100) entgegen der ersten Transportrichtung (R) zwischen der Bereitstellposition (240) und einer Lagerposition (110) in der Lagereinheit (10) bewegbar sind,
• eine zweite Transportvorrichtung (250) vorgesehen ist,
• von der zweiten Transportvorrichtung (250) die Werkstückträger (100) aus der Pufferposition (210) in einer zweiten Transportrichtung (B) winkelig zu der ersten Transportrichtung (R, Z) in die Bereitstellposition (240) bewegbar sind.

2. Werkstückträger-Wechseleinrichtung nach Anspruch 1,
**dadurch gekennzeichnet, dass**
• die erste Transportvorrichtung (220, 230) eine Zuführeinheit (220) und eine Rückführeinheit (230) aufweist,
• von der Zuführeinheit (220) die Werkstückträger(100) in der ersten Transportrichtung (Z) von einer Lagerposition (110) in der Lagereinheit (10) zu der Pufferposition (210) bewegbar sind, und
• von der Rückführeinheit (230) die Werkstückträger (100) entgegen der ersten Transportrichtung (R) aus der Bereitstellposition (240) in eine Lagerposition (110) in der Lagereinheit (10) bewegbar sind, und
• von der Zuführeinheit (220) ein Werkstückträger (100) in der oder entgegen der ersten Transportrichtung (R, Z) bewegbar ist, während von der Rückführeinheit (230) ein Werkstückträger (100) entgegen der bzw. in der ersten Transportrichtung (Z, R) bewegbar ist.

3. Werkstückträger-Wechseleinrichtung nach Anspruch 1 oder 2,
**dadurch gekennzeichnet, dass**
• die zweite Transportvorrichtung (250) an der ersten Transportvorrichtung (220, 230) angeordnet ist.

4. Werkstückträger-Wechseleinrichtung nach Anspruch 3,
**dadurch gekennzeichnet, dass**
• die zweite Transportvorrichtung (250) zusammen mit dem Werkstückträger (100) in der ersten Transportrichtung (R, Z) bewegbar ist.

5. Werkstückträger-Wechseleinrichtung nach Anspruch 3 oder 4,
**dadurch gekennzeichnet, dass**
• eine dritte Transportvorrichtung analog der ersten Transportvorrichtung (220, 230) vorgesehen ist,
• eine vierte Transportvorrichtung analog der zweiten Transportvorrichtung (250) vorgesehen ist,
• die dritte Transportvorrichtung parallel zu der ersten Transportvorrichtung (220, 230)und der ersten Transportvorrichtung zugewandt angeordnet ist, und
• mittels der dritten Transportvorrichtung ein Werkstückträger (100) in der oder entgegen der ersten Transportrichtung (R, Z) bewegbar ist, während mittels der ersten Transportvorrichtung (220, 230) ein Werkstückträger (100) entgegen der bzw. in der ersten Transportrichtung (R, Z) bewegbar ist.

6. Werkstückträger-Wechseleinrichtung nach einem der vorgenannten Ansprüche,
**dadurch gekennzeichnet, dass**
• die erste Transportrichtung (R, Z) im Wesentlichen horizontal ist, die zweite Transportrichtung (B) im Wesentlichen vertikal ist,
• die Werkstückträger (100) in der Lagereinheit (10) im Wesentlichen vertikal übereinander angeordnet sind, und
• eine fünfte Transportvorrichtung vorgesehen ist, von welcher die Lagereinheit (10) in vertikaler Richtung bewegbar ist.

7. Werkstückträger-Wechseleinrichtung nach Anspruch 2 bis 6,
**dadurch gekennzeichnet, dass**
• die Lagereinheit (10) in einen ersten Teilbereich (11) und einen zweiten Teilbereich (12) unterteilt ist, und
• ein Werkstückträger (100) aus einer Lagerposition (110-1) in dem ersten Teilbereich (11) in die Pufferposition (210) bewegbar ist, während ein anderer Werkstückträger (100) aus der Bereitstellposition (240) in eine Lagerposition (110-2) in dem zweiten Teilbereich (12) bewegbar ist.

8. Werkstückträger-Wechseleinrichtung nach Anspruch 7,
**dadurch gekennzeichnet, dass**
• der erste Teilbereich (11) und der zweite Teilbereich (12) mechanisch miteinander koppelbar sind, und
• eine elektromagnetische, hydraulische oder pneumatische Koppelvorrichtung zum mechanischen Koppeln des ersten Teilbereichs (11) der Lagereinheit (10) mit dem zweiten Teilbereich (12) der Lagereinheit (10) vorgesehen ist.

9. Werkstückträger-Wechseleinrichtung nach Anspruch 7,
**dadurch gekennzeichnet, dass**
• der erste Teilbereich (11) und der zweite Teilbereich (12) von einander in der ersten Transportrichtung (R, Z) und/oder der zweiten Transportrichtung (B) beabstandet angeordnet sind.

10. Wechselverfahren für Werkstückträger, wobei ein Werkstückträger (100) aus einer mit einer Mehrzahl von Lagerpositionen (110) versehenen Lagereinheit (10) entnommen und an eine Bereitstellposition (240) bewegt wird, um dort von einer Handhabungseinrichtung verarbeitet zu werden,
**dadurch gekennzeichnet, dass**
• ein Werkstückträger (100) mittels einer ersten Transportvorrichtung (220, 230) in einer ersten Transportrichtung (R, Z) zu einer Pufferposition (210) in der Nähe der Bereitstellposition (240) bewegt wird,
• der Werkstückträger (100) mittels einer zweiten Transportvorrichtung (250) in einer zweiten Transportrichtung (B) von der Pufferposition (210) zu der Bereitstellposition (240) bewegt wird, und
• der Werkstückträger (100) mittels der ersten Transportvorrichtung (220, 230) entgegen der ersten Transportrichtung (R, Z) von der Bereitstellposition (240) in eine der Lagerpositionen (110) bewegt wird.

11. Wechselverfahren für Werkstückträger nach Anspruch 10, wobei die Lagereinheit (10) einen ersten Teilbereich (11) und einen zweiten Teilbereich (12) aufweist, welche in der ersten Transportrichtung (R, Z) und/oder der zweiten Transportrichtung (B) voneinander beabstandet angeordnet sind,
**dadurch gekennzeichnet, dass**
• Werkstückträger (100-1) aus dem ersten Teilbereich (11) und/oder dem zweiten Teilbereich (12) entnommen und zu der Pufferposition (210) bewegt werden, und
• Werkstückträger (100) von der Bereitstellposition (240) in den zweiten Teilbereich (12) und/oder den ersten Teilbereich (11) bewegt werden.

12. Wechselverfahren für Werkstückträger nach Anspruch 11,
**dadurch gekennzeichnet, dass**
• der erste Teilbereich (11) und der zweite Teilbereich (12) mittels einer mechanischen Koppelvorrichtung miteinander gekoppelt werden.

13. Wechselverfahren für Werkstückträger nach Anspruch 10 bis 12, wobei die erste Transportvorrichtung eine Zuführeinheit (220) und eine Rückführeinheit (250) aufweist,
**dadurch gekennzeichnet, dass**
• von der Zuführeinheit (220) die Werkstückträger (100) in der ersten Transportrichtung (R, Z) von einer Lagerposition (110) in der Lagereinheit (10) zu der Pufferposition (210) bewegt werden, und
• von der Rückführeinheit (230) die Werkstückträger (100) entgegen der ersten Transportrichtung (R, Z) aus der Bereitstellposition (240) in eine Lagerposition (110) in der Lagereinheit (10) bewegt werden, und
• von der Zuführeinheit (220) ein Werkstückträger (100) in der oder entgegen der ersten Transportrichtung (R, Z) bewegt wird, während von der Rückführeinheit (230) ein Werkstückträger (100) entgegen der bzw. in der ersten Transportrichtung (R, Z) bewegt wird.

14. Wechselverfahren für Werkstückträger nach Anspruch 10 bis 13, wobei die zweite Transportvorrichtung (250) an der ersten Transportvorrichtung (220, 230) angeordnet ist,
**dadurch gekennzeichnet, dass**
• die zweite Transportvorrichtung (250) zusammen mit dem Werkstückträger (100) in der ersten Transportrichtung (R, Z) bewegt wird.
